# NEUE EUROPÄISCHE PATENTSCHRIFT

(11) **EP 2 795 288 B2**
(45) Veröffentlichungstag und Bekanntmachung des Hinweises auf die Entscheidung über den Einspruch: **27.09.2023**
(45) Hinweis auf die Patenterteilung: 28.10.2020
(21) Anmeldenummer: 12824759.0
(22) Anmeldetag: 18.12.2012
(51) Int. Cl.: G01N 15/14, G01N 15/10

(54) **VERFAHREN ZUM ERMITTELN EINER PARTIKELEIGENSCHAFT UND ZUM KLASSIFIZIEREN EINER PARTIKELCHARGE SOWIE VORRICHTUNG ZUM DURCHFÜHREN DER VERFAHREN**
METHOD FOR DETERMINING A PARTICLE PROPERTY AND FOR CLASSIFYING A PARTICLE CHARGE, AND DEVICE FOR CARRYING OUT SAID METHOD
PROCÉDÉ POUR DÉTERMINER UNE PROPRIÉTÉ PARTICULAIRE ET POUR CLASSIFIER UNE CHARGE PARTICULAIRE, ET DISPOSITIF POUR METTRE EN OEUVRE LE PROCÉDÉ

(30) Priorität: 19.12.2011 DE 102011056611
(43) Veröffentlichungstag der Anmeldung: 29.10.2014
(73) Patentinhaber: NETZSCH TAURUS Instruments GmbH, 99427 Weimar (DE)
(72) Erfinder: SCHUMANN, Matthias, 99427 Weimar (DE)
(74) Vertreter: Weidner Stern Jeschke
(86) Internationale Anmeldenummer: PCT/DE2012/100387
(87) Internationale Veröffentlichungsnummer: WO 2013/091622

(56) Entgegenhaltungen:
- DE-A1-102004 056 520
- DE-A1-102005 055 825
- DE-A1-102007 013 321
- DE-A1-102009 020 777
- DE-A1-102009 020 778
- JP-A- H07 324 915
- US-A- 4 288 162
- US-A- 4 767 212
- US-A- 5 097 516
- US-A- 5 142 160

## Beschreibung

Die Erfindung betrifft ein Verfahren zum Ermitteln einer Partikeleigenschaft, insbesondere einer Fraktionszuordnung, eines ersten Partikels, insbesondere des ersten Partikels einer Partikelcharge, wobei das Verfahren diverse Schritte umfasst und eine Vorrichtung zum Durchführen dieses Verfahrens sowie ein Verfahren zum Klassifizieren einer Partikelcharge.

Korngrößenverteilungen von Schüttgütern werden nach DIN 66165-2 mittels Siebanalyse ermittelt. Hierzu werden Prüfsiebe mit bestimmten, meist quadratischen Maschenweiten beginnend mit der kleinsten Siebweite von unten nach oben gestapelt. Die Probe wird auf das oberste Sieb aufgegeben und für eine bestimmte Zeit einer definierten Bewegung ausgesetzt. Die gravimetrischen Rückstände auf jedem Sieb bilden die Fraktionsanteile in den Größenklassen und ergeben eine Korngrößenverteilung. Die Korngröße wird deshalb definiert als die Maschenweite eines Siebes, durch die das Teilchen gerade noch hindurchpasst.

Die Prüfung der Kornform von Gesteinsbaustoffen ist in der EN 933- 3 (Bestimmung der Plattigkeitskennzahl mittels Stabsieben) und EN 933- 4 (Bestimmung der Kornformkennzahl) geregelt.

Optische Partikelmessverfahren die auf der Grundlage von Scannen der Produkte arbeiten, sind weitläufig bekannt. Hierbei werden sich bewegende Objekte zeilen- (2D) bzw. scheibenweise (3D) erfasst und dabei deren Größe vermessen.

GB 2052736 und US 5 309 215 A beinhalten Vorrichtungen und Verfahren zur zeilenweisen Objekterfassung und der Weiterverarbeitung der Signale zu Größeninformationen.

Diese Verfahren haben den Nachteil, dass sie nur eine 2- dimensionale Objekterfassung ermöglichen und damit bei unbekannten und unregelmäßigen Partikelformen keine definierte Aussage über 3 dimensionale Achsenverhältnisse bzw. Partikelgrößen liefern

US 5 184 733; US 6 614 928 B1 und US 2008/0192987 A1 beschreiben Verfahren die die 3. Dimension ansatzweise erfassen soll.

Die US 5 184 733 beschreibt ein Verfahren das Objekte scheibenweise aufnimmt. Von diesen Scheiben sind jedoch nur Höhe Breite und Länge bekannt. Die eigentliche Form der Scheibe bleibt unbekannt. Eine Größen- oder gar Volumenbestimmung mittels dieser Methode ist bei unregelmäßig geformten Partikeln äußerst ungenau. Das Verfahren besitzt den Nachteil, dass die Partikel einzeln hintereinander auf dem Band liegen müssen, da sie sich sonst in einer Messrichtung verdecken.

US 6 614 928 B1 beinhaltet eine stereoskopische Methode zur Bestimmung von Volumen von Objekten, insbesondere von Quadern. Eine Prozessoreinheit verrechnet die Aufnahmen von Bildern aus 2 unterschiedlichen Richtungen. Eine Partikelbewegung ist in diesem Fall nicht erforderlich.

Die Veröffentlichung US2008/0192987 A1 beschreibt in den Ansprüchen 1-6; 12-16 und 28-31 eine Anordnung auf der Grundlage der Lasertriangulation zur 3- dimensionalen Vermessung von Objekten auf einem Förderband, die bereits als Stand der Technik aus früheren Veröffentlichungen bekannt ist. Es wird eine Methode der Größenbestimmung beschrieben die das Partikel mit einem Ellipsoiden nachbildet. Das Ellipsoid bildet die Grundlage der Volumenbestimmung des Partikels und die Achsen werden zur Größenbestimmung benutzt.

Diese Vorgehensweise ermöglicht jedoch noch keine Erzielung siebäquivalenter Ergebnisse, da die realen Partikelformen durch Modellkörper ersetzt werden.

Die Bestimmung der Plattigkeitskennzahl besteht aus zwei Siebungen. In der ersten Siebung wird die Probe durch Analysensiebe mit den Maschenweiten Di in verschiedene Kornklassen aufgeteilt. Jede dieser Kornklassen wird dann auf Stabsieben mit parallelen Stäben der Weite (Di-Di-1/2) gesiebt. Die Gesamt- Plattigkeitskennzahl ist der prozentuale Anteil der Gesamtmasse aller Durchgänge durch die Stabsiebe bezogen auf die Gesamttrockenmasse der geprüften Körner.

Bei der Bestimmung der Kornform und - kennzahl werden beispielsweise einzelnen Körner ≥ 4 mm nach dem Verhältnis ihrer Kornlänge zu ihrer Korndicke eingestuft. Der Anteil ungünstig geformter Körner (Verhältnis Länge/Dicke > 3:1) wird mit Hilfe eines Kornform-Messschiebers durch Ausmessen von Einzelkörnern bestimmt und in Masseprozent (Masse-%) angegeben.

Diese genormten Messverfahren sind durch subjektive Fehlereinflüsse und einen hohen manuellen Aufwand gekennzeichnet.

Mit dem Aufkommen bildgebender Verfahren wurden Möglichkeiten geschaffen, mit denen die traditionellen mechanischen Methoden abgelöst werden sollten.

Nach DE 4119240 A1 werden Partikel mittels einer Zeilenkamera im freien Fall erfasst und die Messinformationen ohne rechenaufwendige Bildrekonstruktion sofort in Partikelgrößenverteilungen überführt. Dieses Verfahren setzt zur Bewertung der Partikelgrößen kugelförmige Partikel voraus. Unter dieser Annahme wird die Partikelgröße als Kugeldurchmesser definiert und für ein Partikelgemisch eine entsprechende Partikelgrößenverteilung berechnet. Übereinstimmungen zur Siebanalyse können dabei nur bei kugelförmigen Materialien erzielt werden.

In der Patentschrift US 4,288,162 wird eine Anordnung beschrieben, bei der Partikel im freien Fall mittels einer TV- Kamera vermessen werden. Unter der Annahme, dass die Projektionsflächen von Rotationsellipsoiden stammen, wurde die kleinste Achse des Rotationsellipsoids als Korngröße definiert. Die Volumenberechnung erfolgt ebenfalls auf der Grundlage von Rotationsellipsoiden und der zu Hilfenahme von Korrekturkoeffizienten, welche die abweichende reale Form der Partikel von Rotationsellipsoiden ausgleichen sollen.

In der EP 2 322 911 A1 werden auf der Grundlage von erfassten Partikelprojektionsflächen Aussagen zur Partikelform und zur Größenverteilung getroffen. Im freien Fall bei relativ geringen Fallhöhen nehmen Partikel innerhalb der Messebene unbestimmte Projektionslagen ein, die von vielen Faktoren wie Partikelform, Abwurfbedingungen, Partikelschwerpunkt und dergleichen beeinflusst werden. Anhand der zum Zeitpunkt der Bildaufnahme präsentierten Projektionsfläche sind nur bedingt Aussagen zur Partikelgröße möglich.

Weitere Versuche, die Partikelgröße und -form realitätsnah zu erfassen, bestehen in einer Pseudo- 3D-Analyse, der sogenannten Multi-Image Technologie der Firma Microtrac^{®}. Hierbei wird davon ausgegangen, dass sich Partikel während ihres freien Falls durch die Messebene von allen Seiten zeigen und aus den unterschiedlichen Partikelansichten mehr geometrische Informationen abgeleitet werden können. Dabei gilt jedoch die gleiche Einschränkung wie im freien Fall, dass die Lage der Partikel innerhalb der Messebene von vielen Faktoren abhängt und eine allseitige Präsentation des Partikels beim Durchlaufen der Messebene nicht vorausgesetzt werden kann.

Alle bekannten bildanalytischen Systeme zum Erfassen der Partikelgrößenverteilung oder der vorgeschriebenen Kornformkennwerte besitzen den Nachteil, anhand zweidimensionaler Messgrößen eine räumliche Bewertung durchzuführen. Eine, in vielen Fällen geforderte, Übereinstimmung der Messergebnisse mit den genormten traditionellen Messverfahren ist daher kaum möglich. Meist wird versucht, mit Hilfe von materialspezifischen Korrekturfaktoren eine Annäherung zu erzielen. Genauigkeit, Gültigkeitsbereich und Zeitaufwand der Korrekturfaktor-Anwendung stellen jedoch einen großen Mangel dieser Methoden dar.

Zudem ist aus der US 4,767,212 A ein Verfahren zur Volumenbestimmung und zur Gewichtsbestimmung eines Gegenstandes, wie Obst, bekannt, bei dem ein Schlitzmuster auf die obere Oberfläche des Gegenstandes projiziert wird. Dieses Schlitzmuster wird von einer Kamera aufgenommen, anschließend werden die Höhen der Schlitzpositionen auf dem Gegenstand automatisch berechnet und zur Schätzung des Volumens des Gegenstandes verwendet.

Die US 5,097,516 A offenbart ein Verfahren zum Erhalten eines zweidimensionalen Bildes eines lichtreflektierenden topologischen Merkmals, wie einer Lötabscheidung, welches eine andere Höhe als ein umgebender Hintergrund, beispielsweise eine Platinenoberfläche, aufweist, sodass der Kontrast zwischen der Lötabscheidung und der umgebenden Platinenoberfläche verstärkt und das erhaltene zweidimensionale Bild zur Kontrolle auf Fehler der Lötabscheidung verwendet wird.

In der US 5,142,160 A wird ein Verfahren zum Ermitteln des Volumens und/oder der Masse eines Fisches auf der flachen Oberfläche eines sich bewegenden Förderbandes beschrieben, wobei Videobilder der Verschiebung und der Krümmung eines Lichtband quer zur Förderrichtung beim Durchgang eines Fisches für die Berechnung des Volumens und/oder die Masse des Fisches mittels eines Computers verwendet werden.

Aufgabe der Erfindung ist es, den Stand der Technik zu verbessern.

Gelöst wird die Aufgabe durch ein Verfahren gemäß Anspruch 1.

Somit kann ein Verfahren bereitgestellt werden, mit dem ein Partikel vermessen und klassifiziert werden kann. Vorteilhafterweise können Dichte, Kornformkennzahl, Wertigkeit des Partikels, die Masse oder die dreidimensionale Gestalt eines Partikels bestimmt werden. Weiterhin kann dadurch, dass eine dreidimensionale Messgröße bestimmbar ist, eine räumliche Bewertung des Partikels erfolgen. Somit kann vorliegendes Verfahren auf räumlichen Bewertungen verzichten, welche anhand zweidimensionaler Messgrößen erfolgen. Auch kann vorwiegend auf den Einsatz materialspezifischer Korrekturfaktoren und Näherungsformeln verzichtet werden.

Weiterhin wird so ein Verfahren bereitgestellt, bei dem geometrisch klar definierte Ergebnisse erzielbar sind, welche den traditionellen Verfahren, wie Siebanalyse, Stabsiebanalyse und Kornformbewertungen mittels Messschieber entsprechen.

Folgendes Begriffliche sei erläutert:
Die "Partikeleigenschaft" umfasst Gewicht, Dichte, Volumen und ganz besonders bevorzugt die Zugehörigkeit zu einer bestimmten Partikelfraktion und daraus ableitbare Parameter, da durch die räumlichen Ausdehnungsdaten eine Grenzmaschenweite bestimmbar ist, durch welche das Partikel gerade noch hindurchfallen kann.

Partikel können einer Fraktion zugeordnet werden. In diesem Zusammenhang wird von "Fraktionszuordnung" gesprochen. Werden Partikel einer bestimmten Partikelverteilung auf zwei übereinander angeordneten Sieben aufgebracht, wobei das untere Sieb die geringere Maschenweite aufweist, ist unter idealen Voraussetzungen gewährleistet, dass die sich oberhalb des unteren Siebes befindliche Partikelverteilung eine bestimmte Breite aufweist. Somit befindet sich oberhalb des unteren Siebs eine definierte Partikelfraktion.

Dadurch, dass in den drei Raumrichtungen jeweils die kleinste Maschenform (z.B. ein Quadrat) bestimmt wird, durch welche das Partikel gerade noch hindurchfällt, kann dem Partikel die Partikeleigenschaft größer oder kleiner als eine vorgegebene Maschenweite zugewiesen werden.

"Partikel" umfasst sämtliche Körner als auch kleinste Festkörper, welche insbesondere die festen Bestandteile von Aerosolen, Suspensionen oder Pulvern sind. Insbesondere umfasst es Gesteine, welche durch Brechen oder Mahlen zerkleinert wurden oder als naturgeformtes Korn vorliegen. Insbesondere können die Partikel Durchmesser von 10µm bis 700mm aufweisen.

Vorliegend umfasst eine "Partikelcharge" eine Vielzahl von Partikel.

In seiner einfachsten Form umfasst das "optische System" einen optischen Sensor mit einer Ortsauflösung. Dies kann beispielsweise eine CCD (Charge Coupled Device), ein CMOS-Sensor oder eine ortsaufgelöste Fotodiode sein. Um die Eigenschaften zu verbessern, kann dem optischen Detektor ein Linsen- oder Spiegelsystem vorgeschaltet sein. Weiterhin kann, um das Signal-zu-Rausch-Verhältnis zu verbessern, eine Lichtquelle, wie beispielsweise eine Leuchtdiode oder ein Laser, vorgesehen sein.

Damit vorliegend ein gutes Höhensignal zum Partikel erhaltbar ist, handelt es sich bevorzugt um eine linienförmige Lichtquelle, welche beispielsweise einen Laser mit zugeordneter zylindrischer Linse umfasst. In einer bevorzugten Ausführungsform ist somit das optische System eine verschlussfähige CCD-Kamera mit einem zugeordneten Linienlaser.

Beim "optischen Aufnehmen" wird mit dem optischen Detektor ein Bild/Signal des Partikels aufgenommen und zwischen- oder abgespeichert. Somit liegen Bilddaten vor, aus welchen sowohl die Projektionsfläche als auch die Höheninformation ermittelbar sind.

Die "unterschiedlichen Positionen" ergeben sich bevorzugt daraus, dass unter einem ortsfesten optischen System das optisch aufzunehmende Partikel insbesondere mittels eines Förderbandes entlanggeführt wird. Dabei ist die Repetitionsrate zum Bildaufnehmen bei der Kamera so eingestellt, dass bei einem vollständigen Durchschreiten des Partikels durch das Licht des Linienlasers wenigstens 5, bevorzugt 30 und im Besonderen 70 und mehr Bilder durch die Kamera aufgenommen werden. Selbstverständlich kann das Partikel feststehen und das optische System über das Partikel hinwegbewegt werden. Auch lediglich ein Bewegen der Lichtquelle ist mit umfasst.

Das "Transformieren der optischen Aufnahme in eine Raumrepräsentanz" erfolgt insbesondere wie folgt:
Falls sich im (Linien-) Lichtsignal kein Partikel befindet, nimmt das optische System jeweils ein Sensorsignal am identischen Ort des optischen Detektors auf. Tritt nun ein Partikel in das Lichtsignal ein, verschiebt sich - für den Fall, dass optische Achse der Kamera und optische Achse des Lichtsignals voneinander abweichen - örtlich auf dem Detektor das Sensorsignal und eine Signaländerung tritt ein.

Aufgrund der Kenntnis der definierten Geschwindigkeit und dem Zeitpunkt des Abweichens und nicht mehr Abweichens des Lichtsignals sowie die Anzahl der in der Breite betroffenen Pixel des Detektors, ist eine Flächeninformation erhaltbar. Diese Flächeninformation bezeichnet im Weiteren die "Projektionsfläche".

Je höher (dicker) das Partikel ist, desto größer ist die (örtliche) Signaländerung im Sensor. Somit ist die örtliche Signaländerung aus dem CCD-Chip ein Maß für die Höhe (Breite) des Partikels. Es liegt zusätzlich zur Projektionsfläche eine "Höheninformation" vor, welche eine Funktion der Signaländerung ist.

Um zu gewährleisten, dass möglichst die Informationen nur von einem Partikel bestimmt werden und keine Klumpenbildung erfolgt, kann vor dem optischen Aufnehmen ein örtliches Auflösen des ersten Partikels von weiteren Partikeln der Partikelcharge erfolgen.

Dies kann dadurch erfolgen, dass einem langsamen Förderband ein schnelles Förderband zugeordnet ist und die Partikel beim Übergang vom langsamen zum schnellen Förderband örtlich entlang der Förderrichtung aufgelöst werden.

Der Begriff "quasireal" ist dadurch charakterisiert, dass die minimale Projektionsfläche frei von Modellannahmen, wie beispielsweise ellipsoide Partikelform, ist und lediglich durch eine Messauflösung, beispielsweise aufgrund der Pixel der Kamera, eingeschränkt ist.

Eine aus der quasirealen minimalen Projektionsfläche abgeleitete Partikelgröße ist insbesondere eine Maschenweite oder eine Grenzmaschenweite. Die Maschenweite kann quadratförmig, rechteckförmig oder auch rund ausgestaltet sein.

In einer weiteren Ausführungsform des Verfahrens werden die Schritte für das erste Partikel für weitere Partikel der Partikelcharge durchgeführt. Somit können bevorzugt Partikelverteilungen mit einer Vielzahl von Partikel bestimmt werden. Dabei können sinnvolle Ergebnisse bereits ab zehn Partikel erhalten werden, wobei je größer die Anzahl der Partikel ist, desto besser kann die Partikelverteilung ermittelt werden.

Um optimale Werte für die Projektionsfläche zu erhalten, kann die Projektionsfläche mittels der optischen Aufnahmen an den unterschiedlichen Positionen ermittelt werden.

An dieser Stelle sei angemerkt, dass je mehr Bilder von der CCD-Kamera während des Partikeldurchgangs aufgenommen werden, die Projektionsfläche exakter bestimmbar ist. Insbesondere sind die Transportgeschwindigkeit des Fördermittels (Förderband) und die Verschlusszeiten und Repititionsraten des bildaufnehmenden optischen Systems aufeinander abzustimmen.

Um einen genaueren Wert des Partikelvolumens zu bestimmen, kann das optische Aufnehmen eines Partikels zusätzlich mit einem zweiten optischen System erfolgen, wobei die beiden optischen Systeme zueinander versetzt sind, sodass gegenüberliegende Seiten des Partikels optisch abtastbar sind.

Erfindungsgemäß wird entlang eines Ortsvektors der Projektionsfläche jeweils zu einer festen Position die Höheninformation anhand einer örtlichen optischen Verschiebung ermittelt. Erst durch die erhaltenen Höheninformationen liegt eine dreidimensionale Information bezüglich des beobachteten Partikels vor.

Für den Fall, dass die Projektionsfläche eine Matrix aus Zeilen und Spalten entspricht, kann der "Ortsvektor" einer Spalte oder einer Zeile dieser Matrix entsprechen. Mittels des Ortsvektors kann die Lage des Partikels charakterisiert werden.

Für den Fall einer CCD-Kamera (Matrixkamera) kann die örtliche "optische Verschiebung" wie folgt bestimmt werden:
Für den Fall, dass kein Partikel sich im Liniensignal befindet, sei die erste Zeile der CCD-Kamera voll ausgeleuchtet. Tritt nun ein Partikel in das Lichtsignal ein, wird aufgrund des seitlichen Beobachtens ein vertikales Verschieben des Lichtsignals erfolgen.

Entspräche im Fall einer 512- zeiligen CCD-Kamera die Beleuchtung der obersten Zeile beispielsweise einer Höhe von 3mm, dann würde ein Ausleuchten der CCD- Zeile 256 bei einem linearen Zusammenhang einer Höhe von 1,5mm repräsentieren.

An dieser Stelle sei angemerkt, dass ein Kalibrieren erfolgen kann. Bei diesem Kalibrieren werden Partikel mit definierter Höhe vermessen und die örtliche optische Verschiebung entsprechend einer angepassten Kurve kalibriert.

In einem weiteren Aspekt der Erfindung wird die Aufgabe gelöst durch eine Vorrichtung, welche ausgestaltet ist, das zuvor beschriebene Verfahren durchzuführen.

Somit kann eine Anordnung bereitgestellt werden, mittels derer die dreidimensionaler Partikeleigenschaften eines Partikels oder eine Partikelverteilung (einer Partikelcharge) ermittelbar sind.

In einer diesbezüglichen Ausprägungsform weist das optische System eine Linienlichtquelle und einen ortsaufgelösten Optiksensor auf. Dabei kann die Linienlichtquelle mittels Laser und zugeordneter zylindrischer Linse realisiert werden. Bei dem ortsaufgelösten Optiksensor kann es sich um eine CCD-Kamera handeln.

Um die unterschiedlichen Positionen zu ermöglichen, kann eine erste Fördereinrichtung vorgesehen sein, auf welchem das Partikel transportierbar ist, somit kann ein optisches Aufnehmen des Partikels an unterschiedlichen Positionen des Partikels mittels des optischen Systems erfolgen.

Um ein Auflösen einer Partikelcharge zu realisieren, kann eine zweite Fördereinrichtung, welche der ersten Fördereinrichtung zugeordnet ist und welche eine geringere Transportgeschwindigkeit als die erste Fördereinrichtung aufweist, vorgesehen sein, sodass ein örtliches Auflösen transportierter Partikel realisiert wird.

In einem abschließenden Aspekt der Erfindung kann die Aufgabe gelöst werden durch ein Verfahren zum Klassifizieren einer Partikelcharge, wobei das vorgeschriebene Verfahren für eine Vielzahl von Partikel durchgeführt wird und jedes der Partikel mit bestimmten Partikeleigenschaften einer Partikeleigenschaftsklasse zugeordnet wird.

So können insbesondere für die unterschiedlichen Siebverfahren äquivalente Untersuchungsmethoden bereitgestellt werden.

In einer weiteren Ausgestaltung der Erfindung wird die Aufgabe gelöst durch eine Vorrichtung gemäß Anspruch 12.

Somit können quasireale Parameter des gemessenen Partikels bestimmt werden.

Folgendes Begriffliche sei erläutert:
In der einfachsten Ausgestaltung ist die "Schnittkurve" eine Gerade, aber auch kurvige Verläufe sind realisierbar, wobei beispielsweise dann die entsprechenden Detektoren gekrümmt sind und die Krümmung auf den kurvigen Verlauf angepasst ist.

Die "Partikeltransporteinrichtung" (Fördereirichtung) umfasst insbesondere ein Förderband.

Das "freie Fallen" erfolgt insbesondere dadurch, dass das Partikel von der Partikeltransporteinrichtung "abgeworfen" wird und der Partikelweg durch eine Parabelbahn (Wurfparabel) beschreibbar ist. Auch der lediglich senkrechte Fall ist mit umfasst.

Idealer Weise "kreuzt" ein Partikelschwerpunkt die Schnittkurve.

In einer diesbezüglichen Ausgestaltung weist die Vorrichtung eine Referenzeinrichtung auf. An dieser Referenzeinrichtung kann die Linienlichtquelle eine Bezugslinie erzeugen, welche mittels der Kamera auswertbar ist.

Um den (Parabel-) Verlauf des Partikels "vorherzusagen", kann die Vorrichtung eine Trackingeinrichtung aufweisen, welche steuernd und/oder regelnd mit einer der beiden Linienlichtquellen verbunden ist, sodass die Schnittkurve ortsverändernd variabel ist und das Partikel im freien Fall die Schnittkurve schneidet. Das steuern/regeln der Linienlichtquellen kann beispielsweise mittels Piezostellgliedern erfolgen.

Im Weiteren wird die Erfindung anhand von Ausführungsbeispielen näher erläutert. Dabei zeigen:
- Figur 1: eine schematische Darstellung einer Vorrichtung mit zwei einander zugeordneten Fördereinrichtungen und angeordnetem optischen System, wobei auf den Fördereinrichtungen ein Partikel transportiert wird,
- Figur 2: eine schematische Darstellung eines mit einer Linienlichtquelle bestrahlten idealen Partikels aus Sicht einer CCD-Kamera,
- Figur 3: eine grafische Darstellung einer bestimmten Raumrepräsentanz,
- Figur 4: ein ermittelter Partikelquerschnitt mit zugeordneter Siebmaschenweite,

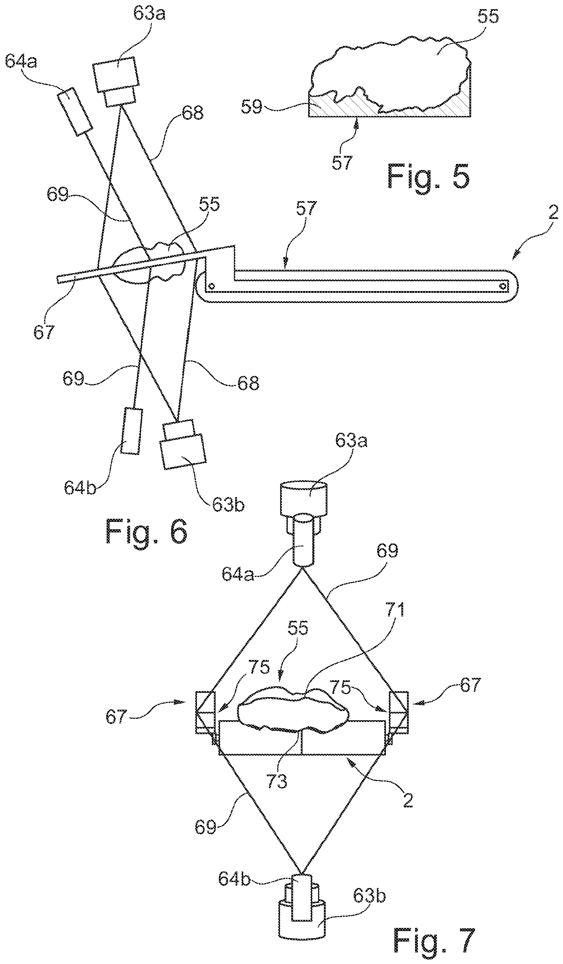

- Figur 5: eine schematische Darstellung eines Schnitts durch ein reales Partikel und mit in Fig. 1 bestimmten Abbildung des Partikels,
- Figur 6: eine schematische Darstellung einer Vorrichtung zum Ermitteln einer Partikeleigenschaft mit zwei gegenüberliegend angeordneten optischen Systemen und zugeordnetem Förderband in einer Seitenansicht und
- Figur 7: eine schematische Darstellung der Vorrichtung aus Fig. 6 in einer Draufsicht.

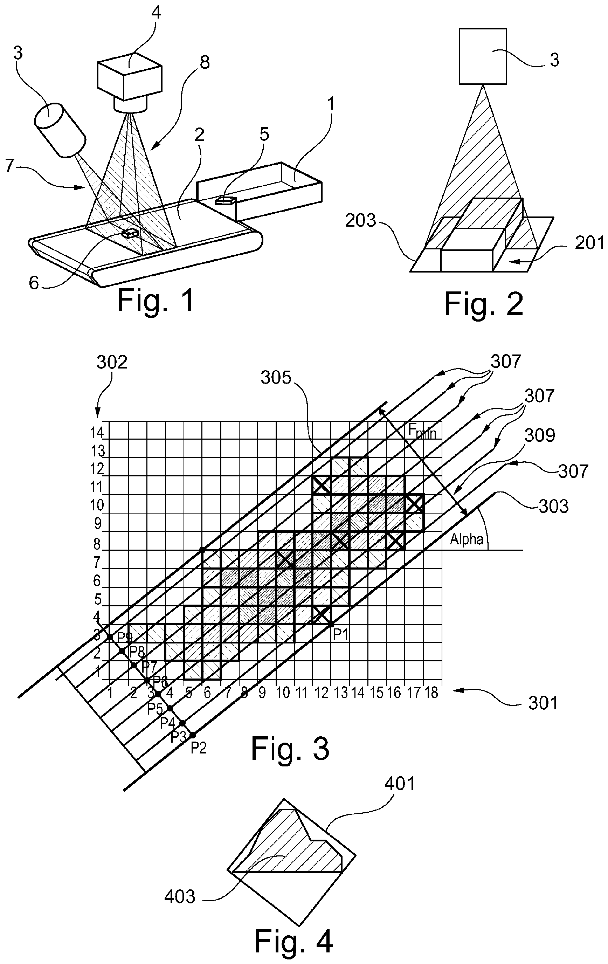

Zum Durchführen des Verfahrens wird eine Anordnung gemäß Fig. 1 verwendet. Diese Anordnung weist eine Dosierrinne 1, ein Förderband 2, einen Laser mit Linienoptik 3 und eine Matrix-CCD-Kamera 4 auf. Die Fördergeschwindigkeit des Förderbandes 2 ist dreimal höher als die Fördergeschwindigkeit der Dosierrinne 1. Die Matrix-CCD-Kamera 4 und der Linienlaser 3 sind zueinander beabstandet (Winkel zwischen den jeweiligen optischen Achsen ist 45°) angeordnet, sodass die Lichtebene 7 des Linienlasers durch die Aufnahmeebene 8 der Kamera 4, welche dem erfassten Bildausschnitt der Kamera entspricht, geschnitten wird.

Das Liniensignal des Lasers 3 ist derart auf dem Förderband 2 ausgerichtet, dass die zentrale Pixelzeile der CCD-Matrix der Kamera 4 ausgeleuchtet ist. Die Transportgeschwindigkeit des Förderbandes beträgt 10cm pro Sekunde. Die Repititionsrate der Kamera beträgt 25ms, sodass etwa 5cm große Partikel 5, 6 während eines Durchlaufs etwa 20-mal durch die Kamera 4 aufgenommen werden.

Das grundsätzliche Messverfahren wird im Weiteren anhand Figur 2 beispielhaft erläutert. Der Linienlaser 3 beleuchtet das Förderband 203. Die Kamera sei das Auge des Betrachters der Fig. 2. Im Falle, dass kein Partikel 201 vorhanden ist "sieht" die Kamera eine horizontale Laserlinie.

Wird nun ein ideales quaderförmiges Partikel 201 durch den Linienlaser 3 bestrahlt, "sieht" die Kamera ein gestuftes Signal. Die Höhe der Stufe ist ein Maß für die Höhe des Partikels. Somit entspricht eine vertikale Signalverschiebung im Kamerachip einer Partikelhöhe. Dieses Messprinzip wird sich im Weiteren zu Nutze gemacht.

Das Vermessen eines Partikels erfolgt grundsätzlich wie folgt:
Die Dosierrinne 1 transportiert die zu vermessenden Partikel 5,6 mit einer langsamen Fördergeschwindigkeit (2cm pro Sekunde) bis zur Abwurfkante. Das nachfolgende Förderband 2 weist eine wesentlich höhere Fördergeschwindigkeit (10cm pro Sekunde) auf, sodass die auf diesem Förderband 2 dosierten Partikel 6 örtlich voneinander getrennt werden.

Partikel 6, die sich auf dem Band befinden, nehmen vorzugsweise eine stabile Lage ein und präsentieren somit aus der Blickrichtung der Kamera 4 ihre größte Projektionsfläche.

Durchläuft ein Partikel 6 das Lichtsignal 7, so erhält die Lichtlinie Abstufungen in Abhängigkeit der Höhenkontur und des Winkels zwischen Linienlaser 3 und Matrixkamera 4.

Nach dem kompletten Durchlauf eines Partikels durch das Lichtband liefert die Kamera ein transformiertes 3-dimensionales Bild (Raumrepräsentanz), welches sich aus spalten- und zeilenadressierten Pixelwerten zusammensetzt. Die Zeilenadresse legt die Bildpunktlage in und die Spaltenadresse quer zur Bandrichtung fest. Die Pixelwerte (Werte zwischen 0 und 255) sind ein Maß für die Höhe der Kontur und können innerhalb einer zweidimensionalen Bilddarstellung (Fig. 3) beispielsweise durch unterschiedliche Graustufen dargestellt werden. Vorliegend ist zur Veranschaulichung die Dichte der Schraffur eines jeden Pixels ein Maß für die Höhe.

Die ermittelten Bilddaten werden komplett mit Pixeladressen und - Werten zwischengespeichert. Danach erfolgt eine Binarisierung. Hierzu wird ein Schwellwert für die Pixelwerte vorgegeben.

Alle unter diesem Schwellwert liegenden Bildpunkte werden als weiß und alle darüber liegenden als schwarz gewertet.

Für jede Bildzeile lassen sich auf diese Weise Binärdaten im sogenannten Run- Length Code (RLC) erzeugen. Stellt man sich eine Projektionsfläche als Aneinanderreihung von einzelnen Zeilen vor, so kennzeichnet ein RLC jeweils die Zeilenadresse, die Spaltenadresse und die Länge der Zeile. Der RLA- Code enthält auf der Grundlage der 3. Dimension noch eine zusätzliche Angabe über den Flächeninhalt (Area) des Projektionsschnittes. Ein Bildobjekt liefert eine Summe von RLAC's.

Im Anschluss an die Binarisierung erfolgt die Segmentierung. Hierbei werden aus dem RLA- Code der Bilder x,y Konturdaten zusammenhängender Projektionsflächen ermittelt.

Ein Partikel ist nun durch eine Reihe von RLA- Code, und eine Reihe von x,y- Konturdaten gekennzeichnet. Für jede einzelne Projektionsfläche lässt sich der Kennwert minimaler Feret- Durchmesser (Fₘᵢₙ) (minimale Abstand zweier paralleler Tangenten an einer Projektionsfläche) 309 und der Winkel α (Alpha), der die Lage von Fₘᵢₙ 309 beschreibt, ermitteln (siehe Figur 3). Die untere Tangente 303 berührt die Partikelkontur im Punkt P1. Aus diesem Punkt und dem Winkel α lässt sich eine Geradengleichung dieser Tangente berechnen.

Entlang der Richtung von Fₘᵢₙ 309 werden die Punkte P3-P9 mit Abständen von einer Pixelbreite zueinander gebildet. Durch diese Punkte lässt sich eine Geradenschar 307 legen, die parallel zu den Tangenten 303, 305 für Fₘᵢₙ 309 liegt und für die Geradengleichungen y=aᵢx+bᵢ bekannt sind.

Für jede dieser einzelnen Geraden 307 wird nun nach Schnittpunkten mit den Sehnen der betreffenden PartikelProjektionsfläche (RLA- Code) gesucht. Der Schnittpunkt ist durch eine Zeilen- und Spaltenadresse 301, 302 bestimmt, zu der in den Basisbilddaten ein Höhenwert vorliegt. Entlang jeder Geraden wird über alle Schnittpunkte das jeweilige Höhenmaximum gesucht (Figur 3, Pixel mit schwarzem Kreuz und den Koordinaten 10 (horizontal) / 7 (vertikal) und dem schwarzen Kreuz 13 (horizontal) / 8 (vertikal)). Die Aneinanderreihung der Höhenmaxima entlang der Richtung von Fₘᵢₙ 309 liefert die minimale Projektionsfläche 403 des Partikels.

Für diese Projektionsfläche 403 muss das kleinste umschließende Quadrat 401 bestimmt werden, sodass eine Angabe zu einem Maschenweitenäquivalent angebbar ist (siehe Fig. 4).

Hierzu wird das Partikel in 1°- Schritten um 45° gedreht und die jeweilige Ausdehnung in Δx und Δy- Richtung ermittelt.

Über alle 45 Winkelschritte werden Δx und Δy miteinander verglichen. Innerhalb dieses Drehbereiches gibt es eine Position in der Δx≈Δy. In diesem Fall kennzeichnet Δx die Maschenweite eines quadratischen Siebes, die das Partikel gerade noch passieren kann (Figur 4). Analog kann für weitere Maschenformen vorgegangen werden.

Sind bestimmte Größenklassen xᵢ (Siebweiten) vorgegeben, in die die Partikel entsprechend ihrer Größe klassifiziert werden sollen, wird das Partikel anhand seiner Größe Δx in die entsprechende Größenklasse xᵢ₋₁ < Δx <= xᵢ eingeordnet.

Auf diese Weise wird eine anzahlbezogene Korngrößenverteilung ermittelt. Siebanalysen liefern jedoch massebezogene Korngrößenverteilungen, welche vorliegend ebenfalls bestimmbar sind.

Das Volumen der Partikel wird aus dem RLA- Code, der zu diesem Partikel gehörenden Sehnen oder Profilschnitte berechnet. Der RLA- Code beinhaltet die Fläche eines Profilschnittes und aus der Bandgeschwindigkeit und der Kamerabildrate (Repititionsrate) ist der Abstand der Profilschnitte zueinander bekannt. Die Summe aller Profilschnittflächen multipliziert mit dem Abstand zwischen zwei Flächen ergibt das Partikelvolumen und damit die Möglichkeit einer Partikelvolumenberechnung. Unter der Voraussetzung von konstanten Dichten über den gesamten Partikelbereich ist eine volumenbezogene Verteilung gleich ihrer massebezogenen Verteilung.

Die Ermittlung der Plattigkeitskennzahl erfolgt unter Betrachtung der berechneten kleinsten quadratischen Maschenweite w, die das Partikel noch passieren kann und der minimalen Dicke (minimaler Abstand zweier paralleler Stäbe oder Tangenten 303, 305, die die Partikelkontur berühren). Ein Partikel gilt als ungünstig (plattig) geformt, wenn die minimale Dicke kleiner als die Hälfte der Maschenweite ist.

Die kleinste passierbare quadratische Maschenweite ist durch den beschriebenen Vorgang bereits bekannt. Die Dicke wird in der Regel durch die maximale Höhe des auf dem Band liegenden Partikels bestimmt.

In Ausnahmefällen könnte das Partikel auch so liegen, dass der minimale Feret-Durchmesser der Projektionsfläche kleiner als die maximale Höhe ist. Dann wird die Dicke durch den minimalen Feret- Durchmesser bestimmt.

Zur Ermittlung der Kornformkennzahl ist ebenfalls die Dicke des Partikels nach dem beschriebenen Verfahren zu erfassen. Ein Partikel gilt als ungünstig geformt, wenn die Dicke kleiner als ein Drittel der maximalen Länge ist. Die Ermittlung der maximalen Länge erfolgt auf der Grundlage des bereits beschriebenen Verfahrens der Binarisierung und Segmentierung mit den daraus abgeleiteten x,y- Konturdaten für jeweils ein Partikel. Mit Hilfe der x,y- Konturdaten der Partikelprojektionsfläche wird neben dem minimalen Feret-Durchmesser 309 auch die maximale Länge ermittelt.

Somit sind Partikel über die beschriebene 3- D-Messanordnung analog zu den traditionellen Kornformmessverfahren in die Kategorien ungünstig oder günstig geformt sortierbar. Der volumen- oder massebezogene Anteil an ungünstig geformten Partikeln lässt sich anhand des bereits ermittelten Partikelvolumens berechnen.

Mit der bisher dargestellten Messvorrichtung wird ein Partikel 55 von "oben" gescannt. Ein Zwischenraum 59 zwischen einer Unterseite des Partikels 55 und einer Auflagefläche 57 eines Förderbands 2 ist nicht abtastbar.

Die Unterseite des Partikels 55 kann mit einer alternativen Messvorrichtung zusätzlich abgetastet werden. Dabei umfasst die alternative Messvorrichtung ein Förderband 2 mit einer Auflagefläche 57. An dem Förderband 2 sind parallele Referenzbleche 67 angeordnet, durch die ein Partikel 55 fallen kann.

Zudem weist die alternative Messvorrichtung ein erstes optisches System mit einem Linienlaser 64a und einer versetzt angeordneten Kamera 63a und ein zweites optisches System mit einem Linienlaser 64b und einer versetzt angeordneten Kamera 63b auf. Die beiden Linienlaser 63a,b sind unterhalb und oberhalb der Referenzbleche 67 angebracht.

Der jeweilige Bildausschnitt 68 der Kameras 63 ist derart eingestellt, dass die zu erwartenden größten Partikel 55 optisch erfasst werden. Die durch die Linienlaser 64a,b ausgesandten Lasersignale 69 sind derart eingerichtet, dass die Referenzbleche 67 ebenfalls ausgeleuchtet sind und sich ein Referenzsignal 75 als Bezugsgröße ergibt.

Das Bestimmen der minimalen Projektionsfläche wird wie folgt durchgeführt:

Ein Partikel 55 wird an das Ende eines Förderbandes 2 transportiert. Sobald das Partikel 55 nicht mehr durch die Auflagefläche 57 des Förderbandes 55 getragen wird, geht das Partikel 55 in den freien Fall über. Aufgrund seiner Anfangsgeschwindigkeit und der sich ergebenen Fallgeschwindigkeit beschreibt das fallende Partikel 55 eine annähernde Parabelflugbahn.

Dabei durchkreuzt das Partikel 55 die Schnittkurve der ausgesandten Lasersignale 69. Dadurch wird auf dem Partikel 55 ein oberes Partikelsignal 71 und ein unteres Partikelsignal 73 durch das ausgesandte Lasersignal 69 erzeugt. Aufgrund des Bezugssignals 75 an den parallelen Referenzblechen 67 werden nun die Abweichungen der Partikelsignale 71, 73 bestimmt und ausgewertet, sodass die quasireale minimale Partikelprojektionsfläche bestimmt wird. Das Verarbeiten dieser Daten zu ableitbaren Daten wie der Grenzmaschenweite erfolgt wie zuvor beschrieben.

### Bezugszeichenliste:

- 1: Dosierrinne
- 2: Förderband
- 3: Linienlaser
- 4: Matrix-CCD-Kamera
- 5: Partikel in Dosierrinne 1
- 6: zu scannendes Partikel
- 7: Lichtebene des Lasers
- 8: Bildebene der Kamera 4
- 55: reales Partikel
- 57: Auflagefläche eines Förderbands
- 59: nicht abgetasteter Partikelbereich
- 63ab: untere und obere CCD-Kamera
- 64ab: unterer und oberer Linienlaser
- 67: Referenzbleche zum Erzeugen von Referenzebenen
- 68: Bildausschnitt der Kameras 63
- 69: Lasersignal
- 71: oberes Partikellasersignal
- 73: unteres Partikellasersignal
- 75: Bezugslasersignal
- 201: ideales quaderförmiges Partikel
- 203: ideale glatte Oberfläche eines Förderbandes
- 301: Zeile der Raumrepräsentanz
- 302: Spalte der Raumrepräsentanz
- 303: erste (untere) Tangente
- 305: zweite (obere) Tangente
- 307: Geradenschar
- 309: Feret-Durchmesser Fₘᵢₙ
- 401: Maschenweite
- 403: bestimmte Partikelquerschnittsfläche (minimale Partikelprojektionsfläche)

## Patentansprüche

1. Verfahren zum Ermitteln einer Partikeleigenschaft eines ersten Partikels (5), insbesondere des ersten Partikels einer Partikelcharge (5,6), wobei Partikel Körner, zerkleinerte Gesteine oder kleinste Festkörper sind und Festkörper feste Bestandteile von Aerosolen, Suspensionen oder Pulvern sind, wobei das Verfahren folgende Schritte umfasst:
- optisches Aufnehmen des ersten Partikels aus unterschiedlichen Positionen mittels eines ersten optischen Systems mit einer ersten Linienlichtquelle und einem ersten ortsaufgelösten Optiksensor (3,4),
- Ermitteln einer Höheninformation entlang eines Ortsvektors einer Projektionsfläche anhand einer örtlichen optischen Verschiebung, sodass mittels des Ortsvektors die Lage des Partikels charakterisiert werden kann,
- Transformieren der optischen Aufnahme in eine Raumrepräsentanz, welche die Projektionsfläche und die Höheninformation umfasst, sodass eine dreidimensionale Messgröße vorliegt, und
- Bestimmen der Partikeleigenschaft, wobei die Partikeleigenschaft eine quasireale, frei von Modellannahmen gebildete und lediglich durch eine Messauflösung eingeschränkte minimale Projektionsfläche (403) des ersten Partikels ist, und
- Ableiten einer Partikelgröße aus der quasirealen, frei von Modellannahmen gebildeten und lediglich durch eine Messauflösung eingeschränkte, minimalen Projektionsfläche (403), wobei die abgeleitete Partikelgröße eine Siebmaschenweite, eine Plattigkeitskennzahl und/oder eine Kornformkennzahl ist.

2. Verfahren nach Anspruch 1, wobei die Siebmaschenweite durch Bestimmen eines kleinsten umschließenden Quadrates (401) für die quasireale, frei von Modellannahmen gebildete und lediglich durch eine Messauflösung eingeschränkte minimale Projektionsfläche (403) abgeleitet wird, sodass eine Angabe zu einem Maschenweitenäquivalent angebbar ist.

3. Verfahren nach einem der vorherigen Ansprüche, wobei vor dem optischen Aufnehmen ein örtliches Auflösen des ersten Partikels von weiteren Partikeln der Partikelcharge erfolgt, wobei das örtliche Auflösen mittels eines langsamen und eines schnellen Förderbands erfolgt und das schnelle Förderband dem langsamen Förderband derart zugeordnet ist, dass die Partikel beim Übergang vom langsamen Förderband zum schnellen Förderband örtlich entlang der Förderrichtung aufgelöst werden.

4. Verfahren nach einem der vorherigen Ansprüche, wobei die Schritte für das erste Partikel für weitere Partikel der Partikelcharge durchgeführt werden.

5. Verfahren nach einem der vorherigen Ansprüche, wobei die Projektionsfläche mittels der optischen Aufnahmen an den unterschiedlichen Positionen ermittelt wird.

6. Verfahren nach einem der vorherigen Ansprüche, wobei das optische Aufnehmen eines Partikels zusätzlich mit einem zweiten optischen System erfolgt, wobei die beiden optischen Systeme zueinander versetzt sind, so dass gegenüberliegende Seiten des Partikels optisch abtastbar sind.

7. Verfahren nach einem der vorherigen Ansprüche, wobei entlang eines Ortsvektors der Projektionsfläche jeweils zu einer festen Position die Höheninformation anhand einer örtlichen optischen Verschiebung ermittelt wird.

8. Vorrichtung zum Ermitteln einer Partikeleigenschaft mit einem ersten optischen System, welche ausgestaltet ist, das Verfahren nach einem der Ansprüche 1 bis 7 durchzuführen.

9. Vorrichtung nach Anspruch 8, **gekennzeichnet durch** eine erste Fördereinrichtung (2), auf welchem das Partikel transportierbar ist und sich so die unterschiedlichen Positionen realisieren.

10. Vorrichtung nach einem der Ansprüche 8 bis 9, **gekennzeichnet durch** eine zweite Fördereinrichtung (1), welche der ersten Fördereinrichtung zugeordnet ist und welche eine geringere Transportgeschwindigkeit als die erste Fördereinrichtung aufweist, sodass ein örtliches Auflösen transportierter Partikel und ein Auflösen einer Partikelcharge realisiert ist.

11. Verfahren zum Klassifizieren einer Partikelcharge, wobei das Verfahren nach einem der Ansprüche 1 bis 7 für eine Vielzahl von Partikel durchgeführt wird und jedes der Partikel mit bestimmten Partikeleigenschaften einer Partikeleigenschaftsklasse zugeordnet wird.

12. Vorrichtung zum Ermitteln einer Partikeleigenschaft mit einem ersten (63a, 64a) und einem zweiten optischen System (63b, 64b), wobei das erste optische System eine erste Linienlichtquelle (63a) und eine erste ortsauflösende Kamera (64a) und das zweite optische System eine zweite Linienlichtquelle (63b) und eine zweite Kamera (64b) aufweisen, die beiden optischen Systeme (63b, 64b) zueinander versetzt angeordnet sind, sodass gegenüberliegende Seiten eines Partikels optisch abtastbar sind, und die erste Linienlichtquelle und die zweite Linienlichtquelle derart angeordnet sind, dass ausgesendete Lichtstrahlen eine Schnittkurve ausbilden, wobei die Vorrichtung eine Partikeltransporteinrichtung (2), welche derart eingerichtet ist, dass ein transportiertes Partikel (55) frei durch die Schnittkurve fällt, und eine Trackingeinrichtung, welche steuernd und/oder regelnd mit einer der beiden Linienlichtquellen verbunden ist, sodass die Schnittkurve ortsverändernd variabel ist und das Partikel im freien Fall die Schnittkurve schneidet, aufweist.

13. Vorrichtung nach Anspruch 12, **gekennzeichnet dadurch** eine Referenzeinrichtung (67), an welcher eine der Linienlichtquellen eine Bezugslinie erzeugt, welche mittels der Kamera auswertbar ist.

## Claims

1. Method for identifying a particle property of a first particle (5), in particular of the first particle of a particle charge (5, 6), wherein particles are grains, comminuted stones or very small solid bodies, and solid bodies are solid components of aerosols, suspensions or powders, wherein the method comprises the following steps:
- optically capturing an image of the first particle from different positions by means of a first optical system comprising a first line light source and a first spatially resolved optical sensor (3, 4),
- identifying height information along a position vector of a projection area on the basis of a spatial optical displacement, so that the position of the particle can be characterized using a position vector,
- transforming the optical image into a spatial representation which includes a projection area and the height information such that a three-dimensional measured variable is provided, and
- determining the particle property, wherein the particle property is a quasi-real minimal projection area (403) of the first particle which is formed free of model assumptions and only limited by a measurement resolution, and
- deriving a particle size from the quasi-real, minimal projection area (403) which is formed free of model assumptions and only limited by a measurement resolution, wherein the derived particle size is a screen mesh width, a flakiness index and/or a grain shape index.

2. Method according to claim 1, wherein the screen mesh width is derived by determining a minimum bounding square (401) for the quasi-real minimal projection area (403) which is formed free of model assumptions and only limited by a measurement resolution, such that an indication of a meshwidth equivalent can be given.

3. Method according to any of the preceding claims, wherein before optically capturing the image, spatial resolution of the first particle from other particles of the particle charge is carried out, wherein the spatial resolution is carried out by means of a slow and a fast conveyor belt and the fast conveyor belt is associated with the slow conveyor belt such that the particles are spatially resolved in the conveying direction during the transition from the slow conveyor belt to the fast conveyor belt.

4. Method according to any of the preceding claims, wherein the steps for the first particles are carried out for further particles of the particle charge.

5. Method according to any of the preceding claims, wherein the projection area is identified at the different positions by means of the optical images.

6. Method according to any of the preceding claims, wherein optically capturing a particle is additionally effected using a second optical system, wherein the two optical systems are offset from one another such that opposite sides of the particle can be optically scanned.

7. Method according to any of the preceding claims, wherein the height information is identified on the basis of a spatial optical displacement along a position vector of the projection area at a fixed position in each case.

8. Device for identifying a particle property using a first optical system which is designed to carry out the method according to any of claims 1 to 7.

9. Device according to claim 8, **characterised by** a first conveying apparatus (2), on which the particle can be transported and the different positions are thus brought about.

10. Device according to any of claims 8 to 9, **characterised by** a second conveying apparatus (1), which is associated with the first conveying apparatus and has a lower transport speed than the first conveying apparatus, such that transported particles are spatially resolved and a particle charge is resolved.

11. Method for classifying a particle charge, wherein the method according to any of claims 1 to 7 is carried out for a large number of particles and each of the particles having particular particle properties are assigned to a particle-property class.

12. Device for identifying a particle property using a first (63a, 64a) and a second (63b, 64b) optical system, wherein the first optical system comprises a first line light source (63a) and a first spatially resolving camera (64a) and the second optical system comprises a second line light source (63b) and a second camera (64b), the two optical systems (63b, 64b) are offset from one another such that opposite sides of a particle can be optically scanned, and the first line light source and the second line light source are arranged such that emitted light beams form an intersection curve, wherein the device comprises a particle-transporting apparatus (2) which is configured such that a transported particle (55) falls freely through the intersection curve, and a tracking apparatus, which is connected to one of the two line light sources in a controlling and/or regulating manner, such that the intersection curve is variable so as to change position and the particle intersects the intersection curve in free fall.

13. Device according to claim 12, **characterized by** a reference apparatus (67), on which one of the line light sources generates a reference line which can be evaluated by means of the camera.

## Revendications

1. Procédé servant à déterminer une propriété de particule d'une première particule (5), en particulier de la première particule d'une charge particulaire (5, 6), dans lequel des particules sont des grains, des roches concassées ou des solides les plus petits et les solides sont des constituants solides d'aérosols, de suspensions ou de poudres, dans lequel le procédé comprend des étapes suivantes :
- la prise de vue optique de la première particule depuis différentes positions au moyen d'un premier système optique avec une première source de lumière linéaire et un premier capteur optique (3, 4) à résolution spatiale,
- l'identification des informations d'hauteur sur la base d'une déplacement spatiale optique, de sorte que la position du particule peut être **caractérisée** en utilisant une vecteur de position,
- la transformation de la prise de vue optique dans une représentation spatiale, laquelle comprend une surface de projection et une information de hauteur si bien qu'une grandeur de mesure tridimensionnelle est de mise, et
- la définition de la propriété de particule, dans lequel la propriété de particule est une surface de projection (403) minimale de la première particule qui est quasi-réelle et formée exempte des hypothèses de modèle et seulement limitée par une résolution de mesure, et
- la déduction d'une taille de particule à partir de la surface de projection (403) minimale qui est quasi-réelle et formée exempte des hypothèses de modèle et seulement limitée par une résolution de mesure, dans lequel la taille de particule déduite est une largeur de maille de tamis, un indice d'aplatissement et/ou un indice de forme de grain.

2. Procédé selon la revendication 1, dans lequel la largeur de maille de tamis est déduite en définissant un plus petit carré (401) d'encadrement pour la surface de projection (403) minimale qui est quasi-réelle et formée exempte des hypothèses de modèle et seulement limitée par une résolution de mesure de sorte qu'une indication concernant une équivalence de largeur de maille peut être indiquée.

3. Procédé selon l'une quelconque des revendications précédentes, dans lequel une résolution spatiale de la première particule d'autres particules de la charge particulaire est effectuée avant la prise de vue optique, dans lequel la résolution spatiale est effectuée au moyen d'une bande transporteuse lente et d'une bande transporteuse rapide et la bande transporteuse rapide est associée de telle manière à la bande transporteuse lente que la résolution spatiale des particules est réalisée le long de la direction de convoyage lors du passage depuis la bande transporteuse lente vers la bande transporteuse rapide.

4. Procédé selon l'une quelconque des revendications précédentes, dans lequel les étapes pour la première particule sont réalisées pour d'autres particules de la charge particulaire.

5. Procédé selon l'une quelconque des revendications précédentes, dans lequel la surface de projection est déterminée au niveau de positions différentes au moyen des prises de vue optiques.

6. Procédé selon l'une quelconque des revendications précédentes, dans lequel la prise de vue optique d'une particule est effectuée en supplément avec un deuxième système optique, dans lequel les deux systèmes optiques sont décalés l'un par rapport à l'autre de sorte que des côtés se faisant face de la particule peuvent être balayés de manière optique.

7. Procédé selon l'une quelconque des revendications précédentes, dans lequel l'information de hauteur est déterminée à l'aide d'un décalage optique local le long d'un vecteur de position de la surface de projection respectivement pour une position fixe.

8. Dispositif servant à déterminer une propriété de particule avec un premier système optique, lequel est configuré pour réaliser le procédé selon l'une quelconque des revendications 1 à 7.

9. Dispositif selon la revendication 8, **caractérisé par** un premier système de convoyage (2), sur lequel la particule peut être transportée et les différentes positions se réalisent ainsi.

10. Dispositif selon l'une quelconque des revendications 8 à 9, **caractérisé par** un deuxième système de convoyage (1), lequel est associé au premier système de convoyage et lequel présente une vitesse de transport inférieure à celle du premier système de convoyage de sorte qu'une résolution spatiale de particules transportées et une résolution de la charge particulaire sont réalisées.

11. Procédé servant à classer une charge particulaire, dans lequel le procédé selon l'une quelconque des revendications 1 à 7 est réalisé pour une pluralité de particules et chacune des particules avec des propriétés de particule définies est associée à une classe de propriété de particule.

12. Dispositif servant à déterminer une propriété de particule avec un premier (63a, 64a) et un deuxième système (63b, 64b) optique, dans lequel le premier système optique présente une première source de lumière linéaire (63a) et une première caméra (64) à résolution spatiale et le deuxième système optique présente une deuxième source de lumière linéaire (63b) et une deuxième caméra (64b), les deux systèmes optiques (63b, 64b) sont disposés de manière décalée l'un par rapport à l'autre de sorte que des côtés se faisant face d'une particule peuvent être balayés optiquement, et la première source de lumière linéaire et la deuxième source de lumière linéaire sont disposées de telle manière que des faisceaux de lumière envoyés forment une courbe d'intersection, dans lequel le dispositif présente un système de transport de particules (2), lequel est mis au point de telle manière qu'une particule (55) transportée tombe librement à travers la courbe d'intersection, et un système de traçage, lequel est relié de manière à commander et/ou à réguler à une des deux sources de lumière linéaire, de sorte que la courbe d'intersection est variable avec changement de position et la particule croise la courbe d'intersection en cas de chute libre.

13. Dispositif selon la revendication 12, **caractérisé par** un système de référence (67), au niveau duquel une des sources de lumière linéaire génère une ligne de référence, laquelle peut être évaluée au moyen de la caméra.
